(19) Europäisches Patentamt / European Patent Office / Office européen des brevets

(11) **EP 2 041 633 B1**

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(51) Int Cl.:
***G05B 23/02*** (2006.01)

(21) Anmeldenummer: **06775709.6**

(22) Anmeldetag: **14.07.2006**

(86) Internationale Anmeldenummer:
**PCT/DE2006/001252**

(87) Internationale Veröffentlichungsnummer:
**WO 2008/006322 (17.01.2008 Gazette 2008/03)**

(54) **ANORDNUNG UND VERFAHREN ZUM SPEICHERN VON MESSWERTEN, INSBESONDERE ZUR ÜBERWACHUNG VON ENERGIEÜBERTRAGUNGSSYSTEMEN**

ARRANGEMENT AND METHOD FOR STORING MEASURED VALUES, IN PARTICULAR FOR MONITORING ENERGY TRANSMISSION SYSTEMS

ENSEMBLE ET PROCEDE POUR ENREGISTRER DES VALEURS DE MESURE, NOTAMMENT POUR LA SURVEILLANCE DE SYSTEMES DE TRANSMISSION D'ENERGIE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**01.04.2009 Patentblatt 2009/14**

(73) Patentinhaber: **SIEMENS AKTIENGESELLSCHAFT**
**80333 München (DE)**

(72) Erfinder: **LITZINGER, Andreas**
**90765 Fürth (DE)**

(56) Entgegenhaltungen:
**WO-A-01/67262      US-A1- 2005 283 909**

**Beschreibung**

Die Erfindung bezieht sich auf eine Anordnung mit einer Steuereinrichtung, einer von der Steuereinrichtung angesteuerten Speichereinrichtung und zumindest zwei Messeinrichtungen, die mit der Steuereinrichtung in Verbindung stehen und zeitlich korreliert jeweils zu denselben Messzeitpunkten Messwerte aufnehmen und zu der Steuereinrichtung übertragen.

Derartige Anordnungen werden beispielsweise im Bereich der Schutztechnik eingesetzt. Sie dienen zum Beispiel dazu, Strom- und Spannung in bzw. auf Energieübertragungsleitungen oder in Energieübertragungssystemen zu erfassen und auszuwerten, um unzulässige oder gefährliche Betriebszustände zu erfassen und ggf. Anlagenteile möglichst schnell abzuschalten mit dem Ziel, Schäden gering zu halten bzw. - soweit möglich - zu vermeiden.

Da zum Feststellen eines Fehlers oder einer Störung zum Teil nicht nur die jeweils aktuellen Messwerte, sondern darüber hinaus auch zeitlich vorausgegangene, alte Messwerte berücksichtigt werden müssen, ist es erforderlich, die Messwerte zumindest für eine gewisse Zeitspanne zwischenzuspeichern. Im Hinblick auf eine nachträgliche Analyse von Störfällen ist es dabei zumeist gewünscht, dass die Speicherzeitspanne möglichst groß ist und zum Beispiel mehrere Tage beträgt. Je größer jedoch die Speicherzeitspanne ist, desto größer wird die Messwertmenge, die verwaltet werden muss, und desto grö-βer werden die Zugriffszeiten auf einzelne Messwerte, die innerhalb der Messwertmenge enthalten bzw. - anschaulich beschrieben - verborgen sind. Standard-Datenbanksysteme, die kommerziell erhältlich sind, ermöglichen es zwar ohne weiteres, auch extrem große Datenmengen zu handhaben, jedoch sind deren Zugriffszeiten für einen Einsatz beispielsweise im Bereich der Schutztechnik für Energieübertragungsanlagen, wie erfinderseitig festgestellt wurde, bei großen Messwertmengen meist zu lang.

So beschreibt die WO 2001/67262 A1 eine Monitoring Vorrichtung für technische Verfahrensabläufe, wobei zwischen analysierten und modellierten Signaldaten auf der Grundlage unterschiedlicher Modellansätze eine jeweilige Zuordnung zwischen den realen und den modellierten Daten vorgenommen wird.

Der Erfindung liegt demgemäß die Aufgabe zugrunde, eine Anordnung anzugeben, die eine große Speicherzeitspanne ermöglicht und dennoch eine minimale Zugriffszeit auf abgespeicherte Messwerte erlaubt.

Diese Aufgabe wird ausgehend von einer Anordnung der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Steuereinrichtung derart ausgestaltet ist, dass sie die Messwerte der zumindest zwei Messeinrichtungen in der Speichereinrichtung in Form einer logischen Matrix mit Zeilen und Spalten abspeichert, wobei sie jeder Messeinrichtung eine individuelle Spalte zuordnet, in der die Messwerte der jeweiligen Messeinrichtung abgespeichert werden, wobei ein neuer Messwert einer jeden Messeinrichtung jeweils in die nächste Zeile der jeweiligen Spalte eingetragen wird, und wobei das Abspeichern der Messwerte verschiedener Messeinrichtungen zeilenmäßig korreliert durchgeführt wird, indem Messwerte verschiedener Messeinrichtungen, die sich auf denselben Messzeitpunkt beziehen, in derselben Zeile abgespeichert werden.

Ein wesentlicher Vorteil der erfindungsgemäßen Anordnung ist darin zu sehen, dass auf abgespeicherte Messwerte relativ schnell zugegriffen werden kann. Dies ist darauf zurückzuführen, dass die Messwerte strukturiert messzeitpunktbezogen abgespeichert werden. Will nämlich ein Auswertmodul, sei es eine hardwaremäßige Auswerteinrichtung oder eine softwareseitige Auswertapplikation, auf zeitlich zurückliegende Messwerte zurückgreifen, so wird sie in der Regel nicht einzelne Messwerte von verschiedensten Messzeitpunkten, sondern Messwertsätze mit Messwerten verschiedener Messeinrichtungen aus einem bestimmten Zeitintervall abfragen. Da aufgrund der erfindungsgemäß vorgesehenen strukturierten Abspeicherung der Messwerte alle Messwerte, die auf denselben Messzeitpunkt oder auf ein bestimmtes Messzeitintervall zurückgehen, in der Speichereinrichtung logisch unmittelbar neben- und untereinander abgespeichert werden, muss zum Abfragen der Messwerte nicht die gesamte zur Verfügung stehende Messwert-Datenmenge berücksichtigt und durchsucht werden; vielmehr reicht es aus, nur den relevanten Speicherabschnitt in einen Zwischenspeicher, beispielsweise der Steuereinrichtung, zu übertragen und nur diesen relevanten Speicherabschnitt weiter zu verwenden. Dadurch wird die Zugriffszeit auf die nachgefragten bzw. benötigten Messwerte deutlich reduziert. Mit anderen Worten macht sich die Erfindung also die Erkenntnis zunutze, dass in der Praxis, insbesondere im Bereich der Schutz- und Leittechnik, Datensätze nicht beliebig abgefragt werden, sondern meist nach einem vorgegebenen Muster, das sich auf die Messzeitpunkte bezieht. An dieser Stelle setzt die Erfindung an, indem das zu erwartende bzw. sehr wahrscheinliche Abfragemuster bereits bei der Abspeicherung der Daten berücksichtigt wird, wodurch der nachfolgende Abfragevorgang beschleunigt wird.

Vorzugsweise wird der für das Abspeichern der Messwerte zulässige bzw. freigegebene Speicherbereich begrenzt, um sicherzustellen, dass andere Einrichtungen wie Auswertmodule und dergleichen einen ausreichenden Speicherbereich innerhalb der Speichereinrichtung zur Verfügung behalten. Demgemäß wird es gemäß einer bevorzugten Ausgestaltung der Anordnung als vorteilhaft angesehen, wenn die Zeilenzahl der Matrix auf eine fest vorgegebene maximale Zeilenanzahl begrenzt ist und wenn die Steuereinrichtung nach einem Beschreiben der letzten Zeile einer jeden Spalte der Matrix in die erste Zeile der jeweiligen Spalte zurückspringt und den jeweils nächsten Messwert der jeweiligen Messeinrichtung in die erste Zeile der jeweiligen Spalte einträgt.

Die Messeinrichtungen sollten und werden ihre Messwerte zwar stets zu denselben Zeitpunkten aufnehmen, so dass sich diese stets auf identische Zeitpunkte beziehen, jedoch werden die Messwerte die Steuereinrichtung nicht gleichzeitig erreichen können. Ist nämlich eine der Messeinrichtungen deutlich näher an der Steuereinrichtung angeordnet als eine andere Messeinrichtung, so werden die Messwerte der örtlich näheren Messeinrichtung bei der Steuereinrichtung in der Regel schneller eintreffen als die der entfernten Messeinrichtung. Um auf eine einfache Weise und damit vorteilhaft zu erreichen, dass dennoch alle bei der Steuereinrichtung eintreffenden Messwerte stets an der richtigen Matrixstelle bzw. als richtiges Matrixelement abgespeichert werden, ist gemäß einer bevorzugten Ausgestaltung der Anordnung vorgesehen, dass die Steuereinrichtung derart ausgestaltet ist, dass sie zunächst auf ein Zeigerfeld zugreift, in dem für jede Messeinrichtung und damit für jede Spalte der Matrix eine Information eingetragen ist, die mittelbar oder unmittelbar angibt, in welcher Zeile der jeweils nächste Messwert einzutragen ist.

Da die Messwerte zeitlich zeilenweise abgespeichert werden, ist ein Abspeichern der absoluten Messzeitpunkte bzw. ein Abspeichern der Uhrzeiten der Messwerterfassung für jeden Messwert individuell nicht erforderlich. Vielmehr reicht es gemäß einer bevorzugten Variante aus, wenn die Steuereinrichtung derart ausgestaltet ist, dass sie nur für eine Untermenge der Zeilen, zumindest jedoch für eine Zeile der Matrix (z. B. für die i-te Zeile), jeweils eine absolute Zeitangabe abspeichert, die den Messzeitpunkt der in dieser Zeile abgespeicherten Messwerte angibt. Beispielsweise wird für jede Spalte der Matrix eine einzige absolute Zeitangabe festgehalten. Die Messzeitpunkte $t_j$ der übrigen Messwerte in anderen Zeilen der Matrix lassen sich dann einfach ermitteln, indem die Differenz der Zeilennummern mit dem zeitlichen Messwerterfassungsabstand multipliziert und die absolute Zeitangabe ZA addiert wird, beispielsweise gemäß:

$$t_j = (Z_j - Z_i) * T + ZA$$

bzw.

$$t_j = (Z_j - Z_i) * 1/f + ZA$$

wobei $Z_j$ die j-te Zeile der Matrix, $Z_i$ die i-te Zeile der Matrix, für die die absolute Zeitangabe ZA gespeichert ist, T die den Messeinrichtungen vorgegebene Zeitspanne zwischen zwei aufeinander folgenden Messzeitpunkten und f der den Messeinrichtungen vorgegebene Messtakt bezeichnet.

Vorzugsweise ist die Steuereinrichtung derart ausgestaltet, dass sie die abgespeicherte absolute Zeitangabe jeweils mit einer neuen absoluten Zeitangabe überschreibt, sobald in die Zeile ein Messwert mit einem gegenüber der abgespeicherten Zeitangabe aktuelleren Messzeitpunkt eingetragen wird.

Besonders bevorzugt wird in ein Zeigerfeld jeweils spaltenindividuell durch eine mittelbare oder unmittelbare Angabe Folgendes eingetragen: die Zeile, in welche der jeweils nächste Messwert der jeweiligen Spalte der Matrix bzw. der jeweiligen Messeinrichtung einzutragen ist, sowie eine absolute Zeitangabe, die den Messzeitpunkt des letzten eingetragenen Messwertes der jeweiligen Spalte angibt. Unter einer mittelbaren Angabe ist in diesem Zusammenhang eine Angabe zu verstehen, aus der sich die Zeile und/oder die Zeitangabe ableiten lässt: So kann beispielsweise die letzte Zeile, in der der letzte Messwert eingegeben wurde, oder stattdessen die neue Zeile, in die ein neuer Messwert einzugeben ist, angegeben werden.

Die Erfindung bezieht sich außerdem auf ein Verfahren zum Abspeichern von Messwerten zumindest zweier Messeinrichtungen.

Um bei einem solchen Verfahren zu erreichen, dass eine große Speicherzeitspanne ermöglicht und dennoch eine minimale Zugriffszeit auf abgespeicherte Messwerte erreicht wird, ist erfindungsgemäß vorgesehen, dass die Messwerte der Messeinrichtungen zeitlich korreliert aufgenommen und in einer Speichereinrichtung in Form einer logischen Matrix mit Zeilen und Spalten abgespeichert werden, wobei jeder Messeinrichtung jeweils eine individuelle Spalte zugeordnet wird und in dieser Spalte die Messwerte der jeweiligen Messeinrichtung abgespeichert werden, wobei ein neuer Messwert einer jeden Messeinrichtung jeweils in die nächste Zeile der jeweiligen Spalte eingetragen wird, und wobei das Abspeichern der Messwerte verschiedener Messeinrichtungen zeilenmäßig korreliert durchgeführt wird, indem Messwerte verschiedener Messeinrichtungen, die sich auf denselben Messzeitpunkt beziehen, in derselben Zeile abgespeichert werden.

Bezüglich der Vorteile des erfindungsgemäßen Verfahrens und bezüglich vorteilhafter Ausgestaltungen des Verfahrens sei auf die obigen Ausführungen im Zusammenhang mit der erfindungsgemäßen Anordnung verwiesen.

Als Erfindung wird außerdem eine Steuereinrichtung angesehen.

Erfindungsgemäß ist im Hinblick auf eine solche Steuereinrichtung vorgesehen, dass die Steuereinrichtung derart ausgestaltet ist, dass sie die Messwerte zumindest zweier Messeinrichtungen in einer Speichereinrichtung in Form einer logischen Matrix mit Zeilen und Spalten abspeichert, wobei sie jeder Messeinrichtung eine individuelle Spalte zuordnet, in der die Messwerte der jeweiligen Messeinrichtung abgespeichert werden, wobei ein neuer Messwert einer jeden Messeinrichtung jeweils in die nächste Zeile der jeweiligen Spalte eingetragen wird, und wobei das Abspeichern der Messwerte verschiedener Messeinrichtungen zeilenmäßig korreliert durchgeführt wird, indem Messwerte verschiedener Messeinrichtungen, die sich auf denselben Messzeitpunkt beziehen, in derselben Zeile abgespeichert werden.

Bezüglich der Vorteile der erfindungsgemäßen Steuereinrichtung und bezüglich vorteilhafter Ausgestaltungen der Steuereinrichtung sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft

Figur 1     ein erstes Ausführungsbeispiel für eine Anordnung, bei der Auswertemodule durch separate hardwaremäßig realisierte Auswerteinrichtungen gebildet sind, die mit einer Steuereinrichtung verbunden sind - anhand dieses Ausführungsbeispiels wird auch das erfindungsgemäße Verfahren beispielhaft erläutert-,

Figur 2     schematisch eine Matrixstruktur, gemäß der die Messwerte der Anordnung gemäß Figur 1 abgespeichert werden, sowie ein dazugehöriges Zeigerfeld,

Figur 3     schematisch den zeitlichen Verlauf einer Messwertabspeicherung,

Figur 4     eine andere Ausgestaltung eines Zeigerfelds,

Figur 5     eine weitere Ausgestaltung eines Zeigerfelds und

Figur 6     ein zweites Ausführungsbeispiel für eine erfindungsgemäße Anordnung, bei der Auswertmodule der Anordnung durch Softwareapplikationen für eine Steuereinrichtung gebildet sind.

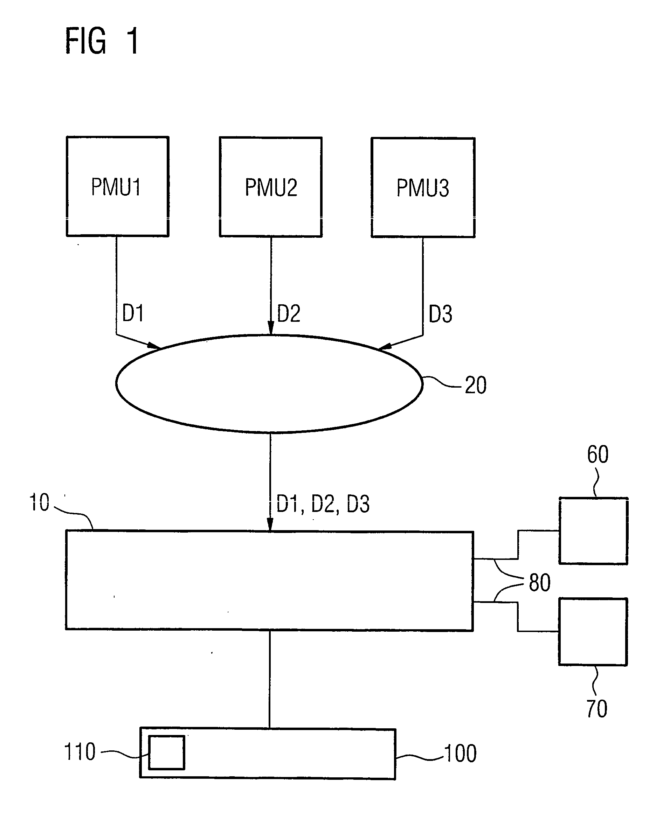

In den Figuren 1 bis 6 werden aus Gründen der Übersichtlichkeit für identische oder vergleichbare Komponenten stets dieselben Bezugszeichen verwendet.

In der Figur 1 erkennt man eine Steuereinrichtung 10, die über ein Datenübertragungsnetzwerk 20 mit drei Messeinrichtungen PMU1, PMU2 und PMU3 in Verbindung steht. Bei den drei Messeinrichtungen PMU1, PMU2 und PMU3 handelt es sich beispielsweise um Zeigermesseinrichtungen (sogenannte Phasor Measurement Units), die Strom- und Spannungswerte einer in der Figur 1 nicht weiter dargestellten Energieübertragungsleitung messen und entsprechende Zeigermesswerte erzeugen. Die Zeigermesswerte werden zusammen mit den jeweiligen Messzeitpunkten ti in Form von Datensätzen D1, D2 und D3 über das Datenübertragungsnetzwerk 20 zu der Steuereinrichtung 10 übertragen.

Nachfolgend wird beispielhaft davon ausgegangen, dass die Messeinrichtung PMU1 in ihren Datensätzen D1 einen Spannungszeigermesswert - nachfolgend kurz Spannungszeiger genannt - V11 sowie einen zugehörigen Stromzeigermesswert - nachfolgend Stromzeiger genannt - I11 zu der Steuereinrichtung 10 überträgt. Die Datensätze D2 der zweiten Messeinrichtung PMU2 enthalten jeweils einen Spannungszeiger V21 und einen Stromzeiger I21. Die dritte Messeinrichtung PMU3 übersendet in ihren Datensätzen D3 zwei Spannungszeiger V31 und V32 sowie einen Stromzeiger I31.

Mit der Steuereinrichtung 10 stehen zwei Auswertmodule 60 und 70 in Verbindung, die als separate, hardwaremäßig ausgeführte Auswerteinrichtungen über elektrische Verbindungsleitungen 80 mit der Steuereinrichtung 10 in Verbindung stehen.

Mit der Steuereinrichtung 10 ist darüber hinaus eine Speichereinrichtung 100 mit einer Datenbank 110 verbunden, in der die Steuereinrichtung 10 die Messwerte, also die Spannungs- und Stromzeiger, der drei Messeinrichtungen PMU1, PMU2 und PMU3 abspeichert.

Die Anordnung gemäß Figur 1 kann beispielsweise wie folgt betrieben werden:

Die Steuereinrichtung 10 wertet die von den drei Messeinrichtungen PMU1, PMU2 und PMU3 empfangenden Datensätze D1, D2 und D3 aus und empfängt somit die Spannungszeiger V11, V21, V31 und V32 sowie die Stromzeiger I11, I21 und I31. Da in den Datensätzen D1, D2 und D3 auch jeweils die jeweiligen Messzeitpunkte ti enthalten sind, kann die Steuereinrichtung 10 für jeden Zeigermesswert auch den jeweiligen Messzeitpunkt feststellen.

Die Steuereinrichtung 10 stellt die entsprechenden Zeigermesswerte den beiden Auswertmodulen 60 und 70 unmittelbar zur Verfügung, so dass diese auf die entsprechenden Messwerte sofort zugreifen können, noch bevor diese in der Speichereinrichtung 100 abgespeichert werden; durch diese Vorgehensweise wird ein erheblicher Geschwindigkeitsgewinn erreicht, weil nämlich die Auswertmodule 60 und 70 die aktuellen Zeigermesswerte bereits unmittelbar weiterverarbeiten können und diese nicht erst relativ zeitaufwendig aus der Speichereinrichtung 100 auslesen müssen.

Die Steuereinrichtung 10 stellt die Zeigermesswerte jedoch nicht nur den Auswertmodulen 60 und 70 zur Verfügung, sondern speichert diese nachfolgend auch in der Datenbank 110 ab. Die Abspeicherung der Daten in der Datenbank 110 erfolgt dabei in einer strukturierten Weise. Konkret werden alle Zeigermesswerte, die sich auf denselben Messzeitpunkt ti beziehen, logisch in derselben Zeile einer Speichermatrixdatei - nachfolgend kurz Matrix genannt - abgelegt. Die jeweilige Spalte der Matrix gibt dabei an, von welcher der Messeinrichtungen PMU1, PMU2 oder PMU3 der jeweilige Messwert stammt. Das Abspeichern der Matrix erfolgt vorzugsweise nicht nur logisch, sondern auch physikalisch matrixförmig in einem entsprechenden Speicherabschnitt.

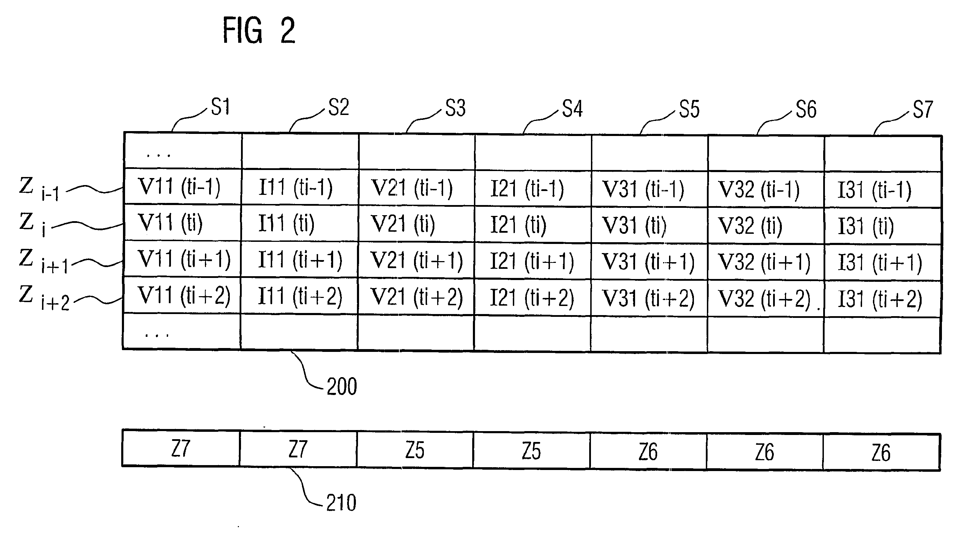

Die Struktur der Matrix ist in der Figur 2 näher gezeigt und mit dem Bezugszeichen 200 gekennzeichnet. Man erkennt, dass die Spannungszeiger V11 der Messeinrichtung PMU1 in der ersten Spalte S1 der Matrix 200 eingetragen werden. Die Stromzeiger I11 der Messeinrichtung PMU1 sind in der zweiten Spalte S2 eingetragen.

In entsprechender Weise werden die Zeigermesswerte der zweiten Messeinrichtung PMU2 in den Spalten S3 und S4 sowie die Zeigermesswerte V31, V32 und I31 der dritten Messeinrichtung PMU3 in den Spalten S5, S6 und S7 abgelegt.

Beim Abspeichern der Zeigermesswerte in der Matrix 200 wird dabei sichergestellt, dass alle Messwerte, die sich auf denselben Zeitpunkt ti beziehen, in derselben Zeile abgelegt werden. Man erkennt, dass in der i-ten Zeile Zi die Zeigermesswerte zum Zeitpunkt ti und in der (i+1)-ten Zeile Zi+1 die Messwerte des Zeitpunkts ti+1 abgespeichert werden. Entsprechendes gilt für den (i+2)-ten Zeitpunkt, der in der Zeile Zi+2 abgelegt wird, usw.

In der Figur 2 ist darüber hinaus ein eindimensionales Zeigerfeld 210 dargestellt, das genauso viele Spalten wie die Matrix 200 aufweist. In den Feldern des Zeigerfeldes 210 wird für jede Spalte der Matrix 200, also spaltenindividuell, jeweils abgespeichert, in welcher Zeile Zj der Matrix 200 der jeweils nächste Messwert einzutragen ist. Das Zeigerfeld 210 ermöglicht es somit sicherzustellen, das eintreffende Zeigermesswerte, die sich auf unterschiedliche Messzeitpunkte beziehen, dennoch an der richtigen Stelle innerhalb der Matrix 200 eingetragen werden. Dies soll nachfolgend anhand eines Beispiels näher erläutert werden:

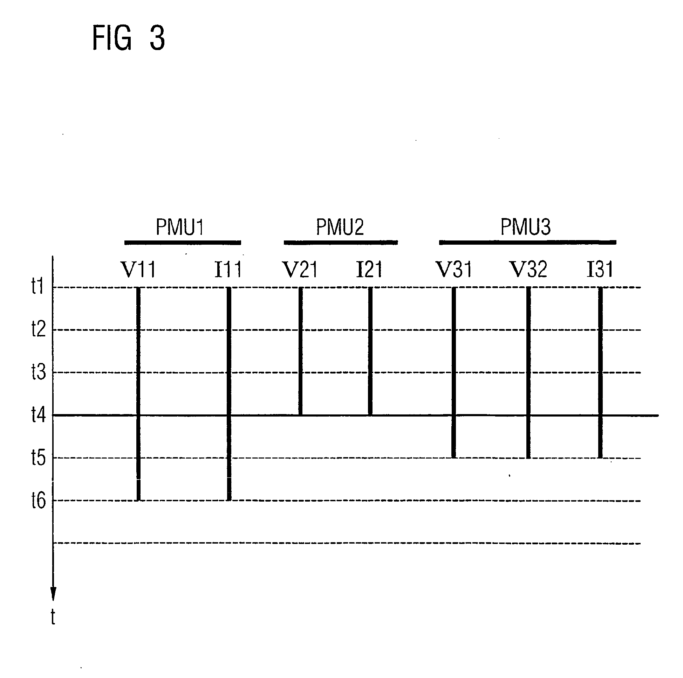

Geht man davon aus, dass die erste Messeinrichtung PMU1 besonders dicht an der Steuereinrichtung 10 angeordnet ist, so werden die Zeigermesswerte V11 und I11 vor den entsprechenden Zeigermesswerten der übrigen Messeinrichtungen PMU2 und PMU3 eintreffen. Dies zeigt beispielhaft die Figur 3, in der die aktuell eingetroffenen Zeigermesswerte durch einen vertikal verlaufenden Balken dargestellt sind. Beim Ausführungsbeispiel gemäß Figur 3 sind also die Zeigermesswerte V11 und I11 der ersten Messeinrichtung PMU1 bereits bis zum Messzeitpunkt t6 eingetroffen.

Die dritte Messeinrichtung PMU3 ist weiter von der Steuereinrichtung 10 entfernt, so dass deren Zeigermesswerte V31, V32 und I31 etwas später als die entsprechenden Zeigermesswerte der ersten Messeinrichtung PMU1 bei der Steuereinrichtung 10 eingehen. Bei dem Beispiel gemäß der Figur 3 liegen die Zeigermesswerte V31, V32 und I31 nur bis zum Zeitpunkt t5 vor, wohingegen für den Messzeitpunkt t6 noch keine Zeigermesswerte bei der Steuereinrichtung 10 eingetroffen sind.

Die zweite Messeinrichtung PMU2 ist beim Ausführungsbeispiel gemäß Figur 3 besonders weit von der Steuereinrichtung 10 entfernt, so dass von dieser Messeinrichtung lediglich Zeigermesswerte V21 und I21 bis zum Messzeitpunkt t4 vorliegen.

Um trotz des zeitlich versetzten Eintreffens der Zeigermessgrößen dennoch sicherzustellen, dass jeder Zeigermesswert stets an der richtigen Stelle innerhalb der Matrix 200 eingetragen wird, wird zunächst das Zeigerfeld 210 ausgelesen. Die Steuereinrichtung 10 wird somit bei Eintreffen eines jeden neuen Zeigermesswerts zunächst in dem Zeigerfeld 210 nachschauen, in welcher Zeile der jeweils nächste Zeigermesswert eingetragen werden muss. Treffen beispielsweise neue Zeigermesswerte der ersten Messeinrichtung PMU1 ein, so wird die Steuereinrichtung 10 nach Auslesen des Zeigerfeldes 210 feststellen, dass die nächsten Zeigermesswerte V11 und I11 in die siebente Zeile Z7 eingetragen werden müssen, da sich die Messwerte auf den siebenten Messzeitpunkt t7 beziehen.

In entsprechender Weise wird die Steuereinrichtung 10 das Zeigerfeld 210 auslesen, wenn neue Zeigermesswerte V21 und I21 der zweiten Messeinrichtung PMU2 empfangen werden: In diesem Fall wird die Steuereinrichtung 10 feststellen, dass die jeweils neuen Zeigermesswerte in der fünften Zeile Z5 abgespeichert werden müssen, da sie sich auf den fünften Messzeitpunkt t5 beziehen.

Neue Zeigermesswerte der dritten Messeinrichtung PMU3 werden in entsprechender Weise in der sechsten Zeile Z6 abgespeichert, da sie sich auf den sechsten Messzeitpunkt t6 beziehen.

Wie in der Figur 2 ersichtlich ist, werden in der Matrix 200 die Messzeitpunkte t1 bis t6 als solche nicht abgespeichert, um Speicherplatz einzusparen. Ein solches Abspeichern der Messzeitpunkte ti ist aufgrund der Matrixstruktur auch nicht nötig, da die Messwerte aufeinanderfolgend strukturiert in der Matrix 200 abgespeichert werden. Da in jeder der Zeilen Zi jeweils nur Messwerte ein und desselben Messzeitpunktes ti abgespeichert sind, lässt sich nämlich der Messzeitpunkt für alle Messwerte der Matrix 200 berechnen, wenn für zumindest eine Zeile der absolute Messzeitpunkt bzw. die absolute Uhrzeit der Aufnahme der Messung bekannt ist und wenn die Messwerte der drei Messeinrichtungen PMU1, PMU2 und PMU3 zeitlich korreliert in einem vorgegebenen Takt bzw. zeitlich äquidistant aufgenommen werden. Dies soll anhand des nachfolgenden Beispiels verdeutlicht werden:

Erfassen die Messeinrichtungen PMU1, PMU2 und PMU3 jeweils alle 25 ms einen neuen Messwert, so kann für jede Zeile der Matrix 200 und damit für jeden Messwert der absolute Messzeitpunkt tj bzw. die Uhrzeit der Messwerterfassung ausgerechnet werden, indem der jeweilige Zeilenwert ausgewertet wird gemäß:

$$tj = (Zj-Zi) * T + ZA$$

$$tj = (Zj-Zi) * 25ms + ZA$$

wobei Zj die j-te Zeile der Matrix, Zi die i-te Zeile der Matrix, T die den Messeinrichtungen PMU1, PMU2 und PMU3 vorgegebene Zeitspanne von 25ms zwischen zwei aufeinander folgenden Messzeitpunkten und ZA den abgespeicherten absoluten Messzeitpunkt bezeichnet.

Im Ergebnis ist festzustellen, dass die Anordnung gemäß Figur 1 ein sehr schnelles Verarbeiten der Datensätze D1 bis D3 ermöglicht, weil die Steuereinrichtung 10 zum einen die Zeigermesswerte den Auswertmodulen 60 und 70 sofort zur Verfügung stellt, um eine schnelle bzw. zeitnahe Auswertung zu ermöglichen, und zum anderen das Abspeichern der Zeigermesswerte in der Speichereinrichtung 100 matrixförmig durchführt, wodurch ein schneller Zugriff auf alle Messwerte ermöglicht wird, die im gleichen Messzeitraum aufgenommen worden sind. Durch das blockweise bzw. gebündelte Abspeichern zeitlich miteinander zusammenhängender Messwerte innerhalb der Matrix 200 ist es nämlich möglich, für eine Datenbankabfrage den relevanten Abschnitt der Datenbank bzw. den relevanten Abschnitt der Matrix in einen Zwischenspeicher, der beispielsweise in der Steuereinrichtung 10 implementiert ist, zu kopieren, um einen schnellen Zugriff auf alle Zeigermesswerte zu ermöglichen, die in dem für die jeweilige Auswertung relevanten Bereich liegen. Es ist somit nicht erforderlich, die gesamte Datenbank 110 bzw. die gesamte Matrix 200 zu öffnen, sondern lediglich Teile der Datenbank 110 bzw. Teile der Matrix, wodurch der Zugriff auf die jeweils gewünschten Datensätze bzw. Zeigermesswerte deutlich beschleunigt wird.

Würden die Messwerte in der Datenbank nicht matrixförmig, sondern beliebig verteilt werden, so müsste auf die gesamte Datenbank zugegriffen werden, was im Falle einer großen Datenbank sehr aufwendig wäre; dies zeigt folgendes Zahlenbeispiel: Sollen beispielsweise die Messwerte in einem 10-Bit-Format abgespeichert werden und die Messwerte von 1000 Messeinrichtungen alle 100ms erfasst und für 30 Tage aufbewahrt werden, so ergibt sich eine Dateigröße von 2,59 TB. Würden die Messwerte in dieser Datei unstrukturiert verteilt sein, so müsste die gesamte Datei im Rahmen einer Auswertung berücksichtigt werden, wozu ein erheblicher Zwischenspeicher sowie eine erhebliche Auslesezeit erforderlich wäre. Aufgrund der logisch matrixförmigen Abspeicherung der Messwerte ist jedoch genau bekannt, in welchem Dateiabschnitt die Messwerte aus einem relevanten Zeitabschnitt zu finden sein werden, so dass nur dieser interessante, relativ kleine Dateiabschnitt in einen Zwischenspeicher kopiert und ausgewertet werden muss.

Durch das matrixförmige Abspeichern der Messwerte lässt sich darüber hinaus eine sehr einfache Begrenzung der Dateigröße bzw. der Größe der Datenbank 110 erreichen, indem eine "ringförmige" Abspeicherung durchgeführt wird: Dies bedeutet, dass bei Erreichen einer maximalen Zeilenzahl wieder mit der ersten Zeile der Matrix 200 gemäß Figur 2 begonnen wird und der darin abgespeicherte alte Inhalt überschrieben wird. Das Abspeichern der Messwerte erfolgt somit zyklisch, wobei die Messwerte eines jeden vorangegangenen Messzyklus durch die Messwerte des jeweils aktuellen Messzyklus überschrieben werden.

Die Funktion des Zeigerfelds 210 besteht bei einem Überschreiben von Altdaten im Übrigen darin anzuzeigen, bis zu welcher Zeile der Matrix 200 die Messwerte aktuell sind bzw. zum aktuellen Zyklus gehören und ab welcher Zeile der Matrix die Messwerte des vorausgegangenen Zyklus abgespeichert sind.

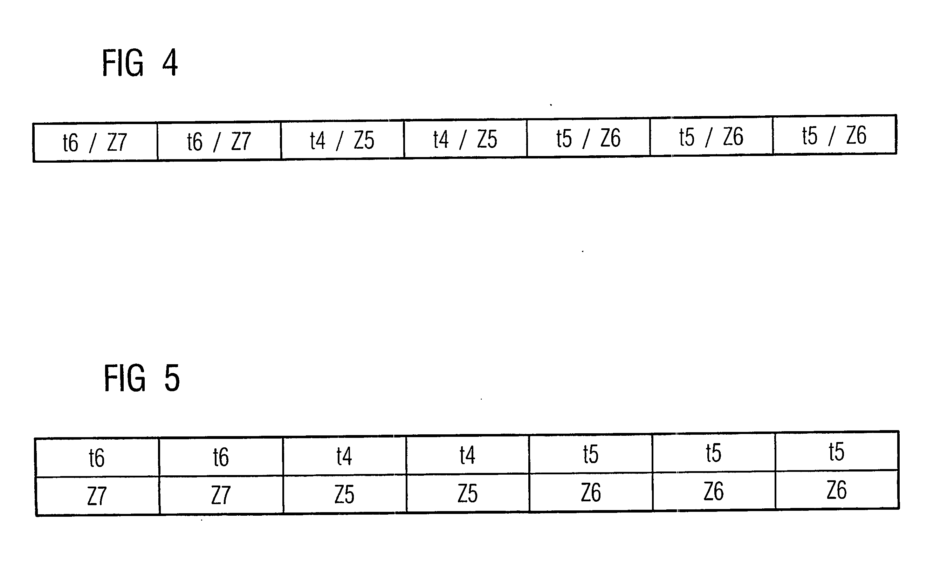

Im Hinblick auf eine einfache Kontrolle, ob Messwerte eines Messzeitpunkts bereits abgespeichert worden sind oder nicht, kann gemäß einer alternativen Ausgestaltung des Zeigerfelds 210 neben der aktuellen Zeilenzahl auch der Zeitpunkt des letzten Messwertes abgespeichert werden; dies zeigt beispielhaft die Figur 4: Man erkennt, dass neben der Zeilenzahl für den nächsten Messwert auch der Zeitpunkt des letzen eingetragenen Messwertes angegeben ist.

Die Abspeicherung der Daten kann in einem eindimensionalen Zeigerfeld erfolgen, wie dies in den Figuren 2 und 4 gezeigt ist; alternativ kann auch ein zwei- oder mehrdimensionales Zeigerfeld genutzt werden, wie dies die Figur 5 beispielhaft zeigt.

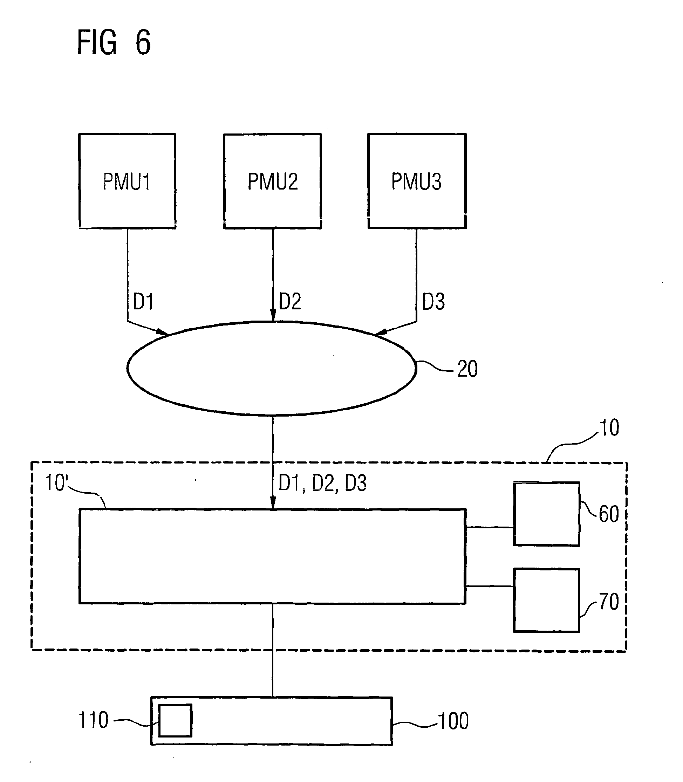

In der Figur 6 ist ein zweites Ausführungsbeispiel für eine Anordnung gezeigt. Bei diesem Ausführungsbeispiel sind die beiden Auswertmodule 60 und 70 nicht als separate Komponenten ausgeführt, sondern als Softwaremodule bzw. Softwareapplikationen, die in der Steuereinrichtung 10 auf einer Prozessoreinheit 10' lauffähig sind. Für die Funktion dieser Softwaremodule ist es unerheblich, wo diese physikalisch abgespeichert sind; sie können beispielsweise innerhalb der Steuereinrichtung 10, in einem separaten Speicherbereich der Speichereinrichtung 100 oder in einem beliebigen anderen Speicher der Anordnung abgespeichert sein.

**Patentansprüche**

1.  Anordnung mit einer Steuereinrichtung (10), einer von der Steuereinrichtung angesteuerten Speichereinrichtung (100) und zumindest zwei Messeinrichtungen (PMU1, PMU2, PMU3), die mit der Steuereinrichtung in Verbindung stehen und zeitlich korreliert jeweils zu denselben Messzeitpunkten Messwerte (V11, I11, V21, I21, V31, V32, I31) aufnehmen und zu der Steuereinrichtung übertragen, **dadurch gekennzeichnet, dass** die Steuereinrichtung derart ausgestaltet ist, dass sie die Messwerte der zwei Messeinrichtungen in der Speichereinrichtung in Form einer logischen Matrix (200) mit Zeilen (Zi) und Spalten (S1-S7) abspeichert,

- wobei sie jeder Messeinrichtung eine individuelle Spalte zuordnet, in der die Messwerte der jeweiligen Messeinrichtung abgespeichert werden,
- wobei ein neuer Messwert einer jeden Messeinrichtung jeweils in die nächste Zeile der jeweiligen Spalte eingetragen wird und

wobei das Abspeichern der Messwerte verschiedener Messeinrichtungen zeilenmäßig korreliert durchgeführt wird, indem Messwerte verschiedener Messeinrichtungen, die sich auf denselben Messzeitpunkt beziehen, in derselben Zeile abgespeichert werden, wobei die Zeilenzahl der Matrix auf eine fest vorgegebene maximale Zeilenanzahl begrenzt ist und dass die Steuereinrichtung nach einem Beschreiben der letzen Zeile einer jeden Spalte der Matrix in die erste Zeile der jeweiligen Spalte zurückspringt und den jeweils nächsten Messwert der jeweiligen Messeinrichtung in die erste Zeile der jeweiligen Spalte einträgt.

2. Anordnung nach Anspruch 1,
   **dadurch gekennzeichnet, dass**
   die Steuereinrichtung derart ausgestaltet ist, dass sie auf ein Zeigerfeld (210) zugreift, in dem für jede Messeinrichtung und damit für jede Spalte der Matrix eine Information eingetragen ist, die angibt, in welcher Zeile der jeweils nächste Messwert einzutragen ist.

3. Anordnung nach einem der vorangehenden Ansprüche,
   **dadurch gekennzeichnet, dass**
   die Steuereinrichtung derart ausgestaltet ist, dass sie für zumindest eine Zeile der Matrix eine absolute Zeitangabe abspeichert, die den Messzeitpunkt der in dieser Zeile abgespeicherten Messwerte angibt.

4. Anordnung nach Anspruch 3,
   **dadurch gekennzeichnet, dass**
   die Steuereinrichtung derart ausgestaltet ist, dass sie die abgespeicherte absolute Zeitangabe jeweils mit einer neuen absoluten Zeitangabe überschreibt, sobald in die Zeile ein Messwert mit einem gegenüber der abgespeicherten Zeitangabe aktuelleren Messzeitpunkt eingetragen wird.

5. Anordnung nach einem der voranstehenden Ansprüche,
   **dadurch gekennzeichnet, dass**
   die Steuereinrichtung derart ausgestaltet ist, dass sie in das Zeigerfeld (210) jeweils spaltenindividuell zumindest eine Angabe einträgt, aus der sich mittelbar oder unmittelbar ergibt:

- die Zeile, in welche der jeweils nächste Messwert der jeweiligen Spalte in die Matrix einzutragen ist, und/oder
- eine absolute Zeitangabe, die den Messzeitpunkt des letzten eingetragenen Messwertes der jeweiligen Spalte angibt.

6. Verfahren zum Abspeichern von Messwerten (V11, I11, V21, I21, V31, V32, I31) zumindest zweier Messeinrichtungen (PMU1, PMU2, PMU3),
   **dadurch gekennzeichnet, dass**
   die Messwerte der Messeinrichtungen zeitlich korreliert aufgenommen und in einer Speichereinrichtung (100) in Form einer logischen Matrix (200) mit Zeilen (Zi) und Spalten (S1-S7) abspeichert werden,

   - wobei jeder Messeinrichtung jeweils eine individuelle Spalte zugeordnet wird und in dieser Spalte die Messwerte der jeweiligen Messeinrichtung abgespeichert werden,
   - wobei ein neuer Messwert einer jeden Messeinrichtung jeweils in die nächste Zeile der jeweiligen Spalte eingetragen wird und
   - wobei das Abspeichern der Messwerte verschiedener Messeinrichtungen zeilenmäßig korreliert durchgeführt wird, indem Messwerte verschiedener Messeinrichtungen, die sich auf denselben Messzeitpunkt beziehen, in derselben Zeile abgespeichert werden und
   - wobei die Zeilenzahl der Matrix auf eine fest vorgegebene maximale Zeilenanzahl begrenzt wird und dass nach einem Beschreiben der letzen Zeile einer jeden Spalte der Matrix in die erste Zeile der jeweiligen Spalte zurückgesprungen wird und der jeweils nächste Messwert der jeweiligen Messeinrichtung in die erste Zeile der jeweiligen Spalte eingetragen wird.

7. Verfahren nach Anspruch 6,
   **dadurch gekennzeichnet, dass**
   auf ein Zeigerfeld (210) zugegriffen wird, in dem für jede Messeinrichtung und damit für jede Spalte der Matrix eine Information eingetragen wird, die angibt, in welcher Zeile der jeweils nächste Messwert einzutragen ist.

8. Verfahren einem der vorangehenden Ansprüche 6 oder 7,
   **dadurch gekennzeichnet, dass**
   für zumindest eine Zeile der Matrix eine absolute Zeitangabe abgespeichert wird, die den Messzeitpunkt der in dieser Zeile abgespeicherten Messwerte angibt.

9. Verfahren nach einem der vorangehenden Ansprüche 6 bis 8,
**dadurch gekennzeichnet, dass**
die abgespeicherte absolute Zeitangabe jeweils mit einer neuen absoluten Zeitangabe überschrieben wird, sobald in dieser Zeile ein Messwert mit einem gegenüber der abgespeicherten Zeitangabe neueren Messzeitpunkt eingetragen wird.

10. Verfahren nach einem der voranstehenden Ansprüche 6 bis 9,
**dadurch gekennzeichnet, dass**
in das Zeigerfeld (210) jeweils spaltenindividuell durch unmittelbare oder mittelbare Angabe eingetragen wird:

     - die Zeile, in welche der jeweils nächste Messwert der jeweiligen Spalte in die Matrix einzutragen ist, und/oder
     - eine absolute Zeitangabe, die den Messzeitpunkt des letzten eingetragenen Messwertes der jeweiligen Spalte angibt.

**Claims**

1. Arrangement comprising a control device (10), a memory device (100) driven by the control device, and at least two measuring devices (PMU1, PMU2, PMU3) which are connected to the control device and, in a temporally correlated manner in each case at the same measurement instants, record measured values (V11, I11, V21, I21, V31, V32, I31) and transmit them to the control device,
**characterized in that**
the control device is configured in such a way that it stores the measured values of the two measuring devices in the memory device in the form of a logical matrix (200) having rows (Zi) and columns (S1-S7),

     - wherein it assigns to each measuring device an individual column in which the measured values of the respective measuring device are stored,
     - wherein a new measured value of each measuring device is in each case entered into the next row of the respective column, and
     - wherein the storage of the measured values of different measuring devices is carried out in a manner correlated row by row by virtue of that fact that measured values of different measuring devices which relate to the same measurement instant are stored in the same row, wherein the number of rows in the matrix is limited to a fixedly predetermined maximum number of rows, and **in that** the control device, after writing to the last row of each column of the matrix, jumps back to the first row of the respective column and enters the respective next measured value of the respective measuring device into the first row of the respective column.

2. Arrangement according to Claim 1,
**characterized in that**
the control device is configured in such a way that it accesses a phasor field (210), in which has been entered, for each measuring device and thus for each column of the matrix, an information item indicating that row in which the respective next measured value is to be entered.

3. Arrangement according to any of the preceding claims,
**characterized in that**
the control device is configured in such a way that it stores, for at least one row of the matrix, an absolute time indication indicating the measurement instant of the measured values stored in this row.

4. Arrangement according to Claim 3,
**characterized in that**
the control device is configured in such a way that it overwrites the stored absolute time indication in each case with a new absolute time indication as soon as a measured value with a more up-to-date measurement instant by comparison with the stored time indication is entered into the row.

5. Arrangement according to any of the preceding claims,
**characterized in that**
the control device is configured in such a way that it enters into the phasor field (210) in each case column-individually at least one indication which reveals indirectly or directly:

     - the row into which the respective next measured value of the respective column is to be entered into the matrix, and/or
     - an absolute time indication indicating the measurement instant of the last entered measured value of the respective column.

6. Method for storing measured values (V11, I11, V21, I21, V31, V32, I31) of at least two measuring devices (PMU1, PMU2, PMU3),
**characterized in that**
the measured values of the measuring devices are recorded in a temporally correlated manner and are stored in a memory device (100) in the form of a logical matrix (200) having rows (Zi) and columns (S1-S7),

     - an individual column is in each case assigned to each measuring device and the measured values of the respective measuring device are stored in said column,

- wherein a new measured value of each measuring device is in each case entered into the next row of the respective column, and

- wherein the storage of the measured values of different measuring devices is carried out in a manner correlated row by row by virtue of the fact that measured values of different measuring devices which relate to the same measurement instant are stored in the same row, and

- wherein the number of rows in the matrix is limited to a fixedly predetermined maximum number of rows, and **in that**, after writing to the last row of each column of the matrix, the method involves jumping back to the first row of the respective column and the respective next measured value of the respective measuring device is entered into the first row of the respective column.

7.  Method according to Claim 6,
    **characterized in that**
    a phasor field (210) is accessed, in which is entered, for each measuring device and thus for each column of the matrix, an information item indicating that row in which the respective next measured value is to be entered.

8.  Method according to either of the preceding Claims 6 and 7, **characterized in that**
    an absolute time indication is stored for at least one row of the matrix, said absolute time indication indicating the measurement instant of the measured values stored in this row.

9.  Method according to any of the preceding Claims 6 to 8,
    **characterized in that**
    the stored absolute time indication is overwritten in each case with a new absolute time indication as soon as a measured value with a more recent measurement instant by comparison with the stored time indication is entered in this row.

10. Method according to any of the preceding Claims 6 to 9,
    **characterized in that**
    the following is entered into the phasor field (210) in each case column-individually by direct or indirect indication:

    - the row into which the respective next measured value of the respective column is to be entered into the matrix, and/or
    - an absolute time indication indicating the measurement instant of the last entered measured value of the respective column.

**Revendications**

1.  Système comprenant un dispositif ( 10 ) de commande, un dispositif ( 100 ) de mémoire commandé par le dispositif de commande et au moins deux dispositifs ( PMU1, PMU2, PMU3 ) de mesure, qui sont en liaison avec le dispositif de commande et qui reçoivent d'une manière corrélée dans le temps respectivement au même instant de mesure des valeurs ( V11, I11, V21, I21, V31, V32, I31 ) de mesures et les transmettent au dispositif de commande,
    **caractérisé en ce que**
    le dispositif de commande est tel qu'il mémorise les valeurs de mesure des deux dispositifs de mesure dans le dispositif de mémorisation sous la forme d'une matrice ( 200 ) logique ayant des lignes ( Zi ) et des colonnes ( S1 à S7 ),

    - dans lequel il affecte à chaque dispositif de mesure une colonne individuelle, dans laquelle les valeurs de mesure du dispositif de mesure respectif sont mémorisées,
    - dans lequel une nouvelle valeur de mesure de chaque dispositif de mesure est portée respectivement dans la ligne la plus proche de la colonne respective, et

    dans lequel la mémorisation des valeurs de mesure de divers dispositifs de mesure est effectuée de manière corrélée suivant les lignes, en mémorisant des valeurs de mesure de divers dispositifs de mesure qui se rapportent au même instant de mesure dans la même ligne, le nombre de lignes de la matrice étant limité à un nombre de lignes maximum prescrit de manière fixe et **en ce que** le dispositif de commande revient, après avoir décrit la dernière ligne de l'une de chaque colonne de la matrice, à la première ligne de la colonne respective et porte la valeur de mesure respective immédiatement suivante du dispositif de mesure respectif dans la première ligne de la colonne respective.

2.  Système suivant la revendication 1,
    **caractérisé en ce que**
    le dispositif de commande est tel qu'il accède à un champ ( 210 ) de vecteur, dans lequel il est porté, pour chaque dispositif de mesure et ainsi pour chaque colonne de la matrice, une information qui indique dans quelle ligne il faut porter la valeur de mesure immédiatement suivante.

3.  Système suivant l'une des revendications précédentes,
    **caractérisé en ce que** le dispositif de commande est tel qu'il mémorise pour au moins une ligne de la matrice une indication absolue de temps, qui indique l'instant de mesure des valeurs de mesure mémorisées dans cette ligne.

**4.** Système suivant la revendication 3, **caractérisé en ce que** le dispositif de commande est tel qu'il écrase les indications absolues de temps mémorisées respectivement par une nouvelle indication absolue de temps dès qu'il est porté dans la ligne une valeur de mesure ayant un instant de mesure plus récent que l'indication de temps mémorisée.

**5.** Système suivant l'une des revendications précédentes, **caractérisé en ce que** le dispositif de commande est tel qu'il porte dans le champ ( 210 ) de vecteur, respectivement individuellement par colonne, au moins une indication dont il ressort indirectement ou directement :

- la ligne dans laquelle la valeur de mesure immédiatement suivante respectivement de la colonne respective doit être portée dans la matrice, et/ou
- une indication absolue de temps, qui indique l'instant de mesure de la dernière valeur de mesure portée de la colonne respective.

**6.** Procédé de mémorisation de valeurs ( V11, I11, V21, I21, V31, V32, I31 ) de mesure d'au moins deux dispositifs ( PMU1, PMU2, PMU3 ), **caractérisé en ce que** on enregistre de manière corrélée dans le temps les valeurs de mesure des dispositifs de mesure et on les mémorise dans un dispositif ( 100 ) de mémoire sous la forme d'une matrice ( 200 ) logique ayant des lignes ( Zi ) et des colonnes ( S1 à S7 ),

- dans lequel on affecte respectivement une colonne individuellement à chaque dispositif de mesure et on mémorise dans cette colonne les valeurs de mesure du dispositif de mesure respectif,
- dans lequel on porte une valeur de mesure nouvelle de chaque dispositif de mesure respectivement dans la ligne immédiatement suivante de la colonne respective et
- dans laquelle on effectue, d'une manière corrélée par ligne, la mémorisation des valeurs de mesure des divers dispositifs de mesure en mémorisant dans la même ligne des valeurs de mesure de dispositifs de mesure différents, qui se rapportent au même instant de mesure et
- dans lequel on limite le nombre de lignes de la matrice à un nombre de lignes maximum prescrit de manière fixe et **en ce qu'**après une description de la dernière ligne de chaque colonne de la matrice, on retourne à la première ligne de la colonne respective et on porte la valeur de mesure immédiatement suivante respective du dispositif de mesure respectif dans la première ligne de la colonne respective.

**7.** Procédé suivant la revendication 6, **caractérisé en ce que** on accède à un champ ( 210 ) de vecteur, dans lequel il est porté, pour chaque dispositif de mesure et ainsi pour chaque colonne de la matrice, une information qui indique dans quelle ligne il faut porter la valeur de mesure respectivement immédiatement suivante.

**8.** Procédé suivant les revendications précédentes 6 ou 7, **caractérisé en ce que** l'on mémorise pour au moins une ligne de la matrice, une indication absolue de temps, qui indique l'instant de mesure des valeurs de mesure mémorisées dans cette ligne.

**9.** Procédé suivant l'une des revendications précédentes 6 à 8, **caractérisé en ce que** l'on écrase l'indication absolue de temps mémorisée respectivement par une nouvelle indication absolue de temps, dès qu'il est porté dans cette ligne une valeur de mesure ayant un instant de mesure plus récent que l'indication de temps mémorisée.

**10.** Procédé suivant l'une des revendications précédentes 6 à 9, **caractérisé en ce que** l'on porte dans le champ ( 210 ) de vecteur respectivement, d'une manière individuelle par colonne, par une indication indirecte ou directs :

- la ligne dans laquelle la valeur de mesure immédiatement suivante respectivement de la colonne respective doit être portée dans la matrice, et/ou
- une indication absolue de temps, qui indique l'instant de
- mesure de la dernière valeur de mesure portée de la colonne respective.

FIG 1

## FIG 2

| S1 | S2 | S3 | S4 | S5 | S6 | S7 |
|---|---|---|---|---|---|---|
| . . . | | | | | | |
| V11 (ti-1) | I11 (ti-1) | V21 (ti-1) | I21 (ti-1) | V31 (ti-1) | V32 (ti-1) | I31 (ti-1) |
| V11 (ti) | I11 (ti) | V21 (ti) | I21 (ti) | V31 (ti) | V32 (ti) | I31 (ti) |
| V11 (ti+1) | I11 (ti+1) | V21 (ti+1) | I21 (ti+1) | V31 (ti+1) | V32 (ti+1) | I31 (ti+1) |
| V11 (ti+2) | I11 (ti+2) | V21 (ti+2) | I21 (ti+2) | V31 (ti+2) | V32 (ti+2) . | I31 (ti+2) |
| . . . | | | | | | |

$Z_{i-1}$
$Z_i$
$Z_{i+1}$
$Z_{i+2}$

200

| Z7 | Z7 | Z5 | Z5 | Z6 | Z6 | Z6 |
|---|---|---|---|---|---|---|

210

EP 2 041 633 B1

## FIG 3

FIG 4

| t6 / Z7 | t6 / Z7 | t4 / Z5 | t4 / Z5 | t5 / Z6 | t5 / Z6 | t5 / Z6 | t5 / Z6 |
|---------|---------|---------|---------|---------|---------|---------|---------|

FIG 5

| t6 | t6 | t4 | t4 | t5 | t5 | t5 | t5 |
|----|----|----|----|----|----|----|----|
| Z7 | Z7 | Z5 | Z5 | Z6 | Z6 | Z6 | Z6 |

EP 2 041 633 B1

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200167262 A1